# EUROPÄISCHE PATENTSCHRIFT

(11) **EP 3 554 714 B1**
(45) Veröffentlichungstag und Bekanntmachung des Hinweises auf die Patenterteilung: **03.02.2021**
(21) Anmeldenummer: 17818069.1
(22) Anmeldetag: 01.12.2017
(51) Int. Cl.: B05B 1/24, B05B 1/30, F16K 31/00, F16K 49/00, B05B 12/10, B05B 13/04

(54) **DRUCKKOPF MIT TEMPERIEREINRICHTUNG**
PRINTING HEAD WITH TEMPERATURE REGULATING DEVICE
TÊTE D'IMPRESSION MUNIE D'UN UN SYSTÈME DE REGULATION DE LA TEMPÉRATURE

(30) Priorität: 14.12.2016 DE 102016014943
(43) Veröffentlichungstag der Anmeldung: 23.10.2019
(73) Patentinhaber: Dürr Systems AG, 74321 Bietigheim-Bissingen (DE)
(72) Erfinder: FRITZ, Hans-Georg, 73760 Ostfildern (DE); WÖHR, Benjamin, 74363 Eibensbach (DE); KLEINER, Marcus, 74354 Besigheim (DE); BUBEK, Moritz, 71640 Ludwigsburg (DE); BEYL, Timo, 74354 Besigheim (DE); HERRE, Frank, 71739 Oberriexingen (DE); SOTZNY, Steffen, 71720 Oberstenfeld (DE)
(74) Vertreter: v. Bezold & Partner Patentanwälte - PartG mbB
(86) Internationale Anmeldenummer: PCT/EP2017/081117
(87) Internationale Veröffentlichungsnummer: WO 2018/108571

(56) Entgegenhaltungen:
- EP-A1- 2 002 898
- EP-A1- 2 777 938
- EP-A2- 0 665 106
- WO-A1-86/01775
- WO-A1-2004/048112
- WO-A1-2017/006245
- WO-A1-2017/006246
- WO-A2-2004/085738
- DE-A1-102010 019 612
- JP-A- S5 722 070
- JP-A- 2010 241 003
- US-A- 4 141 231

## Beschreibung

Die Erfindung betrifft eine Applikationsvorrichtung zum Applizieren eines Applikationsmittels auf ein Bauteil, vorzugsweise zur Applikation eines Lacks auf ein Kraftfahrzeugkarosseriebauteil, mit einem Druckkopf zum vorzugsweise serienweisen und/oder oversprayfreien Applizieren des Applikationsmittels.

Zur Serienlackierung von Kraftfahrzeugkarosseriebauteilen werden als Applikationsgerät üblicherweise Zerstäuber (z.B. Rotationszerstäuber, Airmix-Zerstäuber, Airless-Zerstäuber, etc.) eingesetzt, die jedoch den Nachteil eines beschränkten Auftragswirkungsgrades haben, so dass sich nur ein Teil des applizierten Lacks auf den zu beschichtenden Bauteilen ablagert, während der Rest des applizierten Lacks als sogenannter Overspray entsorgt werden muss.

Zum allgemeinen Stand der Technik kann zunächst auf die DE 20 2013 101 134 U1, die DE 10 2010 019 612 A1, die EP 2 002 898 A1 und die DE 197 43 804 A1 verwiesen werden.

Die US 9,108,424 B2 offenbart einen Drop-On-Demand Valve-Jet-Printer, dessen Wirkprinzip auf der Verwendung von elektrischen Ventilen beruht. Dabei wird ein magnetischer Kolben in einer Spule geführt und durch Stromzufuhr in die Spule angehoben. Dadurch wird eine Ventilöffnung freigegeben, so dass Tinte ausgegeben werden kann. Nachteilhaft daran ist insbesondere, dass derartige Valve-Jet-Printer nicht auf Dauerbetrieb und somit nicht zur Flächenbeschichtung, wie z. B. bei der serienweisen Lackierung von Kraftfahrzeugkarosserien üblich, geeignet sind. So müssen im Dauerbetrieb die Ventilöffnungen entweder mit maximaler Frequenz geöffnet und geschlossen werden oder aber dauerhaft in Öffnungsstellung gehalten werden. Beides kann zu einer Überhitzung der Spulen oder zumindest zu einer starken Erhitzung der Spulen führen, da die Ventile federkraftgeschlossen ausgeführt sind und zum Öffnen des Ventils Spannung an die Spule angelegt wird. Eine Überhitzung kann zur Zerstörung der Spulen führen. Eine starke Erhitzung kann negative Auswirkungen auf das Applikationsmittel haben. Das Applikationsmittel kann durch die aufgenommene Wärme oder Energie geschädigt werden. Das Applikationsmittel kann durch die aufgenommene Wärme oder Energie in seiner Viskosität beeinflusst werden, so dass die Beschichtungsergebnisse in unterschiedlichen Betriebssituationen schwanken, was z. B. bei der serienweisen Lackierung von Kraftfahrzeugbauteilen grundsätzlich inakzeptabel wäre. Eine hohe Öffnungs-Schließ-Frequenz oder ein Daueröffnen kann z. B. zu einer hohen Wärme und somit einer niedrigen Viskosität des Applikationsmittels führen, hingegen kann eine niedrige Frequenz oder ein nur kurzzeitiges Öffnen zu weniger Wärme führen und somit zu einer höheren Viskosität des Applikationsmittels. Schwankungen sind hierbei ungünstig für die Serienproduktion.

Eine Aufgabe der Erfindung ist es, einen Druckkopf zu schaffen, der sich zum serienweisen und/oder dauerhaften Applizieren des Applikationsmittels eignet.

Diese Aufgabe kann mit den Merkmalen des Hauptanspruchs gelöst werden. Vorteilhafte Weiterbildungen der Erfindung können den Unteransprüchen und der folgenden Beschreibung entnommen werden.

Die Erfindung betrifft eine Applikationsvorrichtung zum Applizieren eines Applikationsmittels auf ein Bauteil, vorzugsweise zur Applikation eines Lacks auf ein Kraftfahrzeugkarosseriebauteil.

Die Applikationsvorrichtung umfasst zumindest einen Druckkopf zum vorzugsweise serienweisen und/oder dauerhaften Applizieren des Applikationsmittels. Der Druckkopf umfasst: eine Düsenplatte, zumindest eine Düse (z. B. Öffnung) in der Düsenplatte zur Abgabe des Applikationsmittels, zumindest ein relativ zu der Düsenplatte bewegliches Ventilelement (z. B. Anker oder Ventilnadel) zur Steuerung der Applikationsmittelabgabe durch die zumindest eine Düse, wobei das zumindest eine bewegliche Ventilelement die zumindest eine Düse in einer Schließstellung verschließt und in einer Öffnungsstellung freigibt, und zumindest einen Antrieb (insbesondere Ventilantrieb) zum Bewegen des zumindest eines Ventilelements.

Die Applikationsvorrichtung umfasst zumindest eine Temperiereinrichtung zur Reduzierung einer Erwärmung des zumindest einen Antriebs zweckmäßig während der Applikation des Applikationsmittels .

Die zumindest eine Temperiereinrichtung ermöglicht insbesondere ein serienweises und/oder dauerhaftes Applizieren des Applikationsmittels mittels des Druckkopfs und alternativ oder ergänzend ein im Wesentlichen Konstant-halten der Temperatur und damit der Randbedingungen im Druckkopf, wodurch z. B. temperaturabhängig schwankende Applikationsergebnisse vermieden oder zumindest reduziert werden können. Darüber hinaus kann eine hohe Öffnungs-Schließ-Frequenz ermöglicht werden.

Im Kontext der Erfindung dient die Temperiereinrichtung zum Kühlen des Antriebs. Durch das Kühlen des Antriebs kann eine Erwärmung des Antriebs reduziert oder nahezu verhindert werden. Im Kontext der Erfindung dient die Temperiereinrichtung zum Erwärmen des Applikationsmittels (vorzugsweise zumindest zu Betriebsbeginn). Durch das Erwärmen des Applikationsmittels kann die Viskosität des Applikationsmittels reduziert werden, so dass die Menge des ausgestoßenen Beschichtungsmittels konstant gehalten werden kann oder überhaupt erst ein bestimmter Volumenstrom ermöglicht wird. Weiterhin ermöglicht das Erwärmen auch, den Beschichtungsmitteldruck bei gleichzeitig konstanter Ausbringmenge zu verringern.

Die Reduzierung der übermäßigen Erwärmung des Antriebs kann somit im Kontext der Erfindung zweckmäßig durch eine gezielte Erwärmung unter eine kritische Temperatur und/oder eine gezielte Kühlung ermöglicht werden. Das Temperieren im Kontext der Erfindung umfasst somit zweckmäßig ein Erwärmen und/oder Kühlen.

Dazu wird der Temperierfluidvolumenstrom und/oder die Temperatur desselben so gesteuert, dass z.B. die Standzeit des Antriebs erhöht wird und/oder dass die Temperatur im Druckkopf unterhalb der Zündtemperatur (z.B. < +100°C) der in den Beschichtungsmitteln verwendeten Lösemittel liegt.

Erfindungsgemäß umfasst die zumindest eine Temperiereinrichtung, zweckmäßig zur Reduzierung der Erwärmung des zumindest einen Antriebs, eine Erwärmungseinrichtung zum Erwärmen des Applikationsmittels und somit zum Erniedrigen der Viskosität des Applikationsmittels. Alternativ oder ergänzend ist es möglich, dass die zumindest eine Temperiereinrichtung, zweckmäßig zur Reduzierung der Erwärmung des zumindest einen Antriebs, eine Wärmetauschereinrichtung zur Kühlung des zumindest einen Antriebs umfasst.

Die Erwärmungseinrichtung dient zum Erwärmen eines Temperierfluids, wobei das Temperierfluid somit ein Erwärmungsfluid zum Erwärmen des Applikationsmittels darstellt.

Die Kühlereinrichtung dient zum Kühlen eines Temperierfluids, wobei das Temperierfluid somit ein Kühlfluid zum Kühlen des zumindest einen Antriebs darstellt.

Die zumindest eine Temperiereinrichtunc umfasst zumindest eine Temperierfluidleitung (z. B. einen Kanal, einen, eine Bohrung, einen Schlauch etc.) für ein Temperierfluid, wobei die Temperierfluidleitung innerhalb des Druckkopfs verläuft und/ oder sich entlang der Außenseite des Druckkopfs erstreckt, um den Druckkopf (100) von außen zu kühlen.

Vorzugsweise wird nicht das Applikationsmittel als Temperierfluid genutzt, insbesondere nicht als kühlendes Temperierfluid.

Das Temperierfluid kann z. B. Luft, Wasser oder ein Kühlmittel, vorzugsweise frei von flüchtigen organischen Verbindungen (VOC-freies Kühlmittel - VOC: volatile organic compounds) sein.

Es ist möglich, dass im Druckkopf eine Applikationsmittelzuführung zur Zuführung des Applikationsmittels zu der zumindest einen Düse verläuft.

Die Applikationsmittelzuführung kann z. B. zumindest abschnittsweise von zumindest einer Temperiereinrichtung temperiert (zweckmäßig gekühlt und/oder erwärmt) werden.

Insbesondere kann sich zumindest eine Temperierfluidleitung z. B. zur Erwärmung des Applikationsmittels entlang der Applikationsmittelzuführung erstrecken, vorzugsweise so, dass die Applikationsmittelzuführung durch das Temperierfluid umströmt werden kann. Zu diesem Zweck kann sich die Temperierfluidleitung z. B. in Umfangsrichtung der Applikationsmittelzuführung insbesondere spiral- oder ringförmig, um die Applikationsmittelzuführung herum erstrecken.

Die Düsenplatte kann vorzugsweise die Applikationsmittelzuführung in deren Längsrichtung begrenzen.

Es ist möglich, dass sich zumindest eine Temperierfluidleitung zur Kühlung des Antriebs, insbesondere einer elektrischen Spule des Antriebs, entlang des Antriebs, insbesondere der Spule, erstreckt und/oder so erstreckt, dass das Temperierfluid den zumindest einen Antrieb, insbesondere die Spule, umströmt.

Die zumindest eine Temperiereinrichtung kann insbesondere eine Pumpe zum Befördern des Temperierfluids umfassen.

Die zumindest eine Temperiereinrichtung kann z. B. eine passive Temperierung zur Verfügung stellen.

Es ist möglich, dass die zumindest eine Temperiereinrichtung eine Wärmeleitkonstruktion aus wärmeleitfähigem Material umfasst.

Die Wärmeleitkonstruktion kann z. B. dazu dienen, um von dem zumindest einen Antrieb erzeugte Wärme zweckmäßig nach außen effektiv abzuleiten. Alternativ oder ergänzend kann die Wärmeleitkonstruktion z. B. dazu dienen, durch zumindest eine Temperiereinrichtung (z. B. eine Temperierfluidleitung) erzeugte Wärme effektiv zum Applikationsmittel zu leiten. Alternativ oder ergänzend kann die Wärmeleitkonstruktion z. B. dazu dienen, durch die zumindest eine Temperiereinrichtung (z. B. eine Temperierfluidleitung) erzeugte Kälte zum zumindest einen Antrieb zu leiten.

Die Wärmeleitkonstruktion kann somit im Kontext der Erfindung insbesondere dazu dienen, Wärme zur Erwärmung des Applikationsmittels effektiv zu übertragen und/oder Kälte zur Kühlung des zumindest einen Antriebs effektiv zu übertragen und/oder Wärme des zumindest einen Antriebs effektiv abzuleiten.

Die Wärmeleitkonstruktion kann z. B. Wärmeleitbleche und/oder Wärmeleitrippen umfassen.

Die Wärmeleitkonstruktion kann auch z. B. einen Wärmeleitfunktionsblock umfassen, wobei der zumindest eine Antrieb in dem Wärmeleitfunktionsblock positioniert sein kann. Vorzugsweise sind alle Antriebe, insbesondere Spulen, des Druckkopfs im Wärmeleitfunktionsblock untergebracht.

Die Wärmeleitkonstruktion kann sich z. B. zumindest abschnittsweise an der Außenseite des Druckkopfes erstrecken und/oder zumindest abschnittsweise innerhalb des Druckkopfes. Dadurch kann z. B. eine effektive Wärme-/Kälte-Übertragung von innerhalb des Druckkopfs nach außen oder umgekehrt gewährleistet werden.

Die Wärmeleitkonstruktion kann z. B. an dem zumindest einen Antrieb, vorzugsweise der Spule, angeordnet sein, vorzugsweise so, dass sie den zumindest einen Antrieb in dessen Umfangsrichtung umspannt, was eine effektive Wärmeableitung und/oder Kältezuführung hin zum zumindest einen Antrieb ermöglicht. Zu diesem Zweck kann die Wärmeleitkonstruktion z. B. in Form einer Hülse oder Buchse um den zumindest einen Antrieb herum angeordnet sein.

Die Wärmeleitkonstruktion kann sich z. B. auch entlang der Applikationsmittelzuführung erstrecken. Z. B. kann die Düsenplatte selbst als Wärmeleitkonstruktion ausgeführt sein.

Das wärmeleitfähige Material kann z. B. ein metallisches Material, Kupfer oder Aluminium umfassen.

Es ist möglich, dass die zumindest eine Temperiereinrichtung eine Kühl-Pad-Anordnung (z. B. eine Kühlkissen- oder Kühlacku-Anordnung, zweckmäßig in Sandwichbauweise) zum zumindest abschnittsweisen Einpacken des Druckkopfes umfasst.

Die Kühl-Pad-Anordnung kann z. B. zur zumindest zeitweise kontinuierlichen Durchströmung mit einem Kühlfluid ausgeführt sein und somit eine aktive Temperierung bewirken. Allerdings kann im Austauschbetrieb eine Kühl-Pad-Anordnung auch vorgekühlt an den Druckkopf montiert werden und nach Erwärmung durch eine andere vorgekühlte Kühl-Pad-Anordnung ersetzt werden, so dass die Kühl-Pad-Anordnung auch zur passiven Temperierung genutzt werden kann.

Es ist möglich, dass zumindest eines von folgenden z. B. außen an den Druckkopf montiert ist und/oder oder zumindest abschnittsweise im Druckkopf angeordnet ist: die Erwärmungseinrichtung, die Kühler- und/oder Wärmetauschereinrichtung, zumindest eine Temperierfluidleitung und/oder die Pumpe.

Der zumindest eine Antrieb arbeitet vorzugsweise elektromechanisch (z. B elektromagnetisch oder piezoelektrisch).

Der zumindest eine Antrieb umfasst insbesondere eine elektrische Spule zur Betätigung des Ventilelements. Die Spule ist vorzugsweise der Teil des zumindest einen Antriebs, dessen Erwärmung zu reduzieren ist. Die zumindest eine Temperiereinrichtung dient somit insbesondere zur Reduzierung einer Erwärmung der Spule während der Applikation des Applikationsmittels.

Es ist möglich, dass der zumindest eine Antrieb ein vorzugsweise elastisches Rückstellelement zur Betätigung des Ventilelements umfasst.

Es ist möglich, dass das Ventilelement in Abhängigkeit von der Bestromung der Spule verschoben wird.

Zur Erzeugung eines Tropfenstrahls können die Spule und ein z. B. elastisches Rückstellelement (z. B. eine Feder) dafür sorgen, dass das Ventilelement zwischen der Öffnungsstellung und der Schließstellung hin- und her bewegt wird. Der Tropfenstrahl kann z. B. mehrere im Wesentlichen kugelförmige oder längliche Tropfen umfassen. Der Tropfenstrahl liegt zweckmäßig zwischen der zumindest einen Düse und dem Bauteil vor.

Zur Erzeugung eines zusammenhängenden Applikationsmittelstrahls kann die Spule das Ventilelement dauerhaft in der Öffnungsstellung halten. Ein vorzugsweise elastisches Rückstellelement kann z. B. das Ventilelement in Ruhephasen in die Schließstellung bewegen, wobei während der Applikation des Applikationsmittels das Ventilelement zweckmäßig dauerhaft in der Öffnungsstellung gehalten wird. Der zusammenhängende Applikationsmittelstrahl liegt zweckmäßig zwischen der zumindest einen Düse und dem Bauteil vor.

Das Applikationsmittel kann z. B. viskos, hochviskos oder strukturviskos sein, vorzugsweise mit einer Viskosität von über 15mPas, über 60mPas, über 100mPas oder über 130mPas und/oder vorzugsweise mit einer Viskosität kleiner 400mPas oder kleiner 200mPas oder kleiner 1500mPas (gemessen bei einer Schergeschwindigkeit von 1000s⁻¹) und/oder ein Lack sein.

Es ist möglich, dass die zumindest eine Temperiereinrichtung (insbesondere die Erwärmungseinrichtung, die Kühler- und/oder Wärmetauschereinrichtung, zumindest eine Temperierfluidleitung und/oder die Pumpe) Teil einer Ringleitung ist.

Die zumindest eine Temperiereinrichtung kann den zumindest einen Antrieb während der Applikation des Applikationsmittels auf eine Temperatur von unter 80°C, unter 60°C, unter 50C° oder unter 40°C temperieren.

Der Druckkopf kann vorzugsweise zumindest eines der folgenden Merkmale aufweisen:
- der Druckkopf ist zum im Wesentlichen zerstäubungs- oder sprühnebelfreien Applizieren des Applikationsmittels ausgeführt, und/oder
- der Druckkopf ist auf Dauerbetrieb ausgelegt und dient zur Flächenbeschichtung des Bauteils, und/oder
- der Druckkopf gibt einen eng begrenzten Applikationsmittelstrahl ab im Gegensatz zu einem (wie z. B. durch einen Zerstäuber erzeugten, zerstäubten) Sprühnebel, und/oder
- der Druckkopf gibt einen Tropfenstrahl ab, z. B. im Gegensatz zu einem in Strahllängsrichtung zusammen hängenden Applikationsmittelstrahl, und/oder
- der Druckkopf gibt einen in Strahllängsrichtung zusammen hängenden Applikationsmittelstrahl ab, z. B. im Gegensatz zu einem Tropfenstrahl, und/oder
- der Druckkopf weist einen Auftragswirkungsgrad von mindestens 80%, 90%, 95% oder 99% auf, so dass vorzugsweise im Wesentlichen das gesamte applizierte Applikationsmittel vollständig auf dem Bauteil abgelagert wird, im Wesentlichen ohne Oversprayerzeugung, und/oder
- der Druckkopf weist eine Flächenbeschichtungsleistung von mindestens 0,5 m²/min, 1m²/min, 2m²/min oder mindestens 3m²/min auf, und/oder
- der Druckkopf weist mindestens einen elektrisch ansteuerbaren Aktor aufweist, um das Applikationsmittel aus dem Druckkopf auszustoßen, insbesondere einen Magnetaktor oder einen Piezoaktor.

Zu erwähnen ist, dass der Druckkopf vorzugsweise eine Vielzahl an Düsen (z. B. über 5, über 10 oder sogar über 15 Düsen) und eine dementsprechende Anzahl an zugehörigen Ventilelementen und zugehörigen Antrieben umfassen kann.

Die Düsen sind vorzugsweise in zumindest einer Düsenreihe in der Düsenplatte angeordnet.

Zu erwähnen ist außerdem, dass der im Rahmen der Erfindung verwendete Begriff eines Druckkopfs allgemein zu verstehen ist und lediglich insbesondere zur Abgrenzung von Zerstäubern (z.B. Rotationszerstäuber, Scheibenzerstäuber, Airless-Zerstäuber, Airmix-Zerstäuber und/oder Ultraschallzerstäuber) dient, die einen Sprühnebel des zu applizierenden Applikationsmittels erzeugen. Im Gegensatz dazu erzeugt der erfindungsgemäße Druckkopf vorzugsweise zumindest einen, insbesondere eine Vielzahl räumlich eng begrenzter Applikationsmittelstrahlen.

Weiterhin ist zu erwähnen, dass der erfindungsgemäße Drucckopf vorzugsweise zur Applikation eines Lacks (z.B. Basislack, Klarlack, Wasserlack und/oder lösemittelbasierter Lack) dient. Der erfindungsgemäße Druckkopf kann jedoch alternativ auch zur Applikation anderer Applikationsmittel, insbesondere Beschichtungsmittel, ausgelegt sein, wie beispielsweise zur Applikation von Dichtstoff, Dämmstoff, Klebstoff, Primer etc., um nur einige Beispiele zu nennen.

Darüber hinaus ist zu erwähnen, dass zumindest eine Temperierfluidleitung zumindest abschnittweise als zweckmäßig flexibler Schlauch ausgeführt sein kann, alternativ oder ergänzend aber auch zumindest abschnittsweise als ein Kanal, der z. B. in eine im Druckkopf angeordnete Komponente eingearbeitet sein kann.

Der Applikationsabstand zwischen der zumindest einen Düse und der Bauteiloberfläche beträgt vorzugsweise mindestens 4mm, 10 mm, 20mm oder 40 mm und/oder höchstens 200mm oder 100 mm.

Die Temperierung kann z. B. nur bestimmte Teilabschnitte des Druckkopfes umfassen, z. B. die Applikationsmittel-führenden Bereiche und/oder die einzelnen Antriebe, oder den im Wesentlichen gesamten Innenbereich des Druckkopfs umfassen.

Die Erfindung umfasst auch einen Applikationsroboter, vorzugsweise einen Beschichtungs- oder Lackierroboter, mit zumindest einer Applikationsvorrichtung wie hierin offenbart. Der Applikationsroboter dient zweckmäßig zur Führung eines oder mehrerer Druckköpfe und kann z. B. zumindest fünf oder zumindest sechs bewegliche Roboterachsen aufweisen.

Es ist möglich, dass zumindest eines von folgenden zumindest abschnittsweise an oder in den Applikationsroboter montiert ist, z. B. an oder in ein Robotergehäuse, einen Roboterarm und/oder eine Roboterbasis: die Erwärmungseinrichtung, die Kühler- und/oder Wärmetauschereinrichtung, ein Teilabschnitt zumindest einer Temperierfluidleitung und/oder die Pumpe.

Allerdings ist es auch möglich, dass zumindest eines von folgenden beabstandet zum Applikationsroboter zur Verfügung gestellt ist: die Erwärmungseinrichtung, die Kühler- und/oder Wärmetauschereinrichtung, ein Teilabschnitt zumindest einer Temperierfluidleitung, und/oder die Pumpe.

Vorzugsweise wird als Temperiermedium Luft eingesetzt. Dies hat Vorteile, da Druckluft üblicherweise leicht verfügbar ist und diese mit einfachen Mitteln gekühlt oder erwärmt werden kann. Die Viskosität von Luft ist gering, um auch durch Spalte und kleine Durchführungen zu strömen. Die Ableitung der durch den Druckkopf geströmten Luft kann z.B. durch Schläuche an jede Stelle innerhalb oder außerhalb der Lackierkabine erfolgen. Der Nachteil der schlechteren Wärmeübertragung wird durch die vorgenannten Vorteile bei weitem aufgehoben.

Die oben beschriebenen bevorzugten Ausführungsformen der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Ansicht einer Applikationsvorrichtung gemäß einer Ausführungsform der Erfindung,
- Figur 2: zeigt eine schematische Ansicht einer Applikationsvorrichtung gemäß einer anderen Ausführungsform der Erfindung,
- Figur 3: zeigt eine Prinzip-/Detaildarstellung eines Teils eines Druckkopfes gemäß einer Ausführungsform der Erfindung,
- Figur 4: zeigt eine Prinzip-/Detaildarstellung eines Teils eines Druckkopfes gemäß einer anderen Ausführungsform der Erfindung,
- Figur 5: zeigt eine schematische Ansicht einer Applikationsvorrichtung gemäß einer Ausführungsform der Erfindung,
- Figur 6: zeigt eine schematische Ansicht einer Applikationsvorrichtung gemäß einer anderen Ausführungsform der Erfindung,
- Figur 7: zeigt eine schematische Ansicht eines Druckkopfs zum Erzeugen eines zusammenhängenden Applikationsmittelstrahls gemäß einer Ausführungsform der Erfindung,
- Figur 8: zeigt eine schematische Ansicht eines Druckkopfs zum Erzeugen eines Tropfenstrahls gemäß einer Ausführungsform der Erfindung,
- Figur 9: zeigt eine Prinzipdarstellung einer Temperierung gemäß einer Ausführungsform der Erfindung, und
- Figur 10: zeigt eine Ansicht zweier Applikationsroboter mit einer Applikationsvorrichtung gemäß einer Ausführungsform der Erfindung.

Die unter Bezugnahme auf die Figuren beschriebenen bevorzugten Ausführungsformen der Erfindung stimmen teilweise überein, wobei ähnliche oder identische Teile mit den gleichen Bezugszeichen versehen sind, und zu deren Erläuterung auch auf die Beschreibung anderer Ausführungsformen oder Figuren verwiesen wird, um Wiederholungen zu vermeiden.

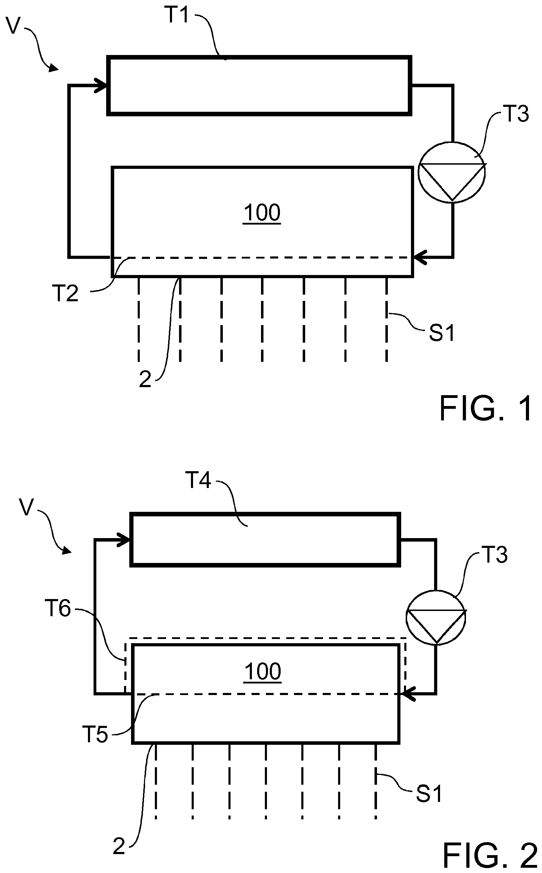

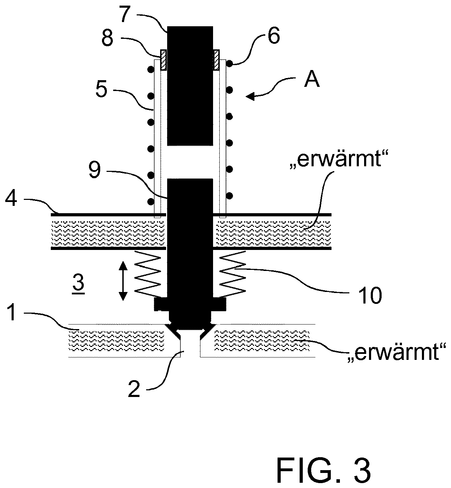

Figur 1 zeigt eine schematische Ansicht einer Applikationsvorrichtung V mit einem Druckkopf 100 gemäß einer Ausführungsform der Erfindung, wobei Figur 3 eine Prinzip-/Detailansicht eines Teils des Druckkopfes 100 zeigt. Die Applikationsvorrichtung V und insbesondere der Druckkopf 100 werden nachfolgend unter gemeinsamer Bezugnahme auf die Figuren 1 und 3 beschrieben.

Die Applikationsvorrichtung V dient zum Applizieren eines Applikationsmittels auf ein Bauteil, insbesondere zur Applikation eines Lacks auf ein Kraftfahrzeugkarosseriebauteil. Hierfür umfasst die Applikationsvorrichtung V insbesondere einen Druckkopf 100 zum serienweisen, dauerhaften sowie im Wesentlichen zerstäubungs- und sprühnebelfreien Applizieren des Applikationsmittels.

Figur 3 zeigt eine Prinzip-/Detailansicht eines Teils des Druckkopfs 100, mit einer Düsenplatte 1 und einer Düse 2 in der Düsenplatte 1. Ein relativ zu der Düsenplatte 1 bewegliches, vorzugsweise magnetisches, Ventilelement 9 (z. B. Anker oder Ventilnadel) dient zur Steuerung der Applikationsmittelabgabe durch die Düse 2, wobei das bewegliche Ventilelement 9 die Düse 2 in einer Schließstellung verschließt und in einer Öffnungsstellung freigibt. Ein elektromechanischer Antrieb (zweckmäßig Ventilantrieb) A dient zum Bewegen des Ventilelements 9. Der Druckkopf 100 weist eine Vielzahl solcher Düsen 2 auf, mit jeweils zugehörigem Ventilelement 9 und zugehörigem Antrieb A, wobei in Figur 1 der Übersichtlichkeit halber nur eine Düse mit einem Bezugszeichen 2 versehen ist.

Der Antrieb A umfasst eine elektrische Spule 6 zur Betätigung des Ventilelements 9 in Abhängigkeit von der Bestromung der Spule 6, insbesondere zur Betätigung des Ventilelements 9 in die Öffnungsstellung. Der Antrieb A umfasst ferner ein elastisches Rückstellelement 10, z. B. eine Spiralfeder, zur Betätigung des Ventilelements 9 in die Schließstellung.

Das zu applizierende Applikationsmittel wird über eine Applikationsmittelzuführung 3 im Druckkopf 100 den Düsen 2 zugeführt. Die Applikationsmittelzuführung 3 wird (in Figur 3 unten) durch die Düsenplatte 1 und (in Figur 3 oben) durch eine weitere Platte 4 begrenzt, wobei die Düsenplatte 1 und die Platte 4 separate Bauteile sein können oder Teil einer z. B. einstückig-integralen (z. B. runden oder rechteckförmigen) rohrförmigen Applikationsmittelzuführung 3.

Die Platte 4 weist koaxial zu der Düse 2 eine Öffnung auf, auf die ein Spulenrohr 5 koaxial aufgesetzt ist, wobei das Spulenrohr 5 mit der Spule 6 bewickelt ist.

In dem Spulenrohr 5 befindet sich ein magnetischer Spulenkern 7, der am in Figur 3 oberen Ende des Spulenrohrs 5 durch eine Dichtung 8 gegenüber dem Spulenrohr 5 abgedichtet sein kann.

Darüber hinaus befindet sich in dem Spulenrohr 5 abschnittsweise das Ventilelement 9, das in Richtung des Doppelpfeils verschiebbar ist, wobei die Bewegung des Ventilelements 9, wie schon erwähnt, von der Bestromung der Spule 6 abhängt.

Figur 3 zeigt das Ventilelement 9 hierbei in einer Schließstellung, um die Düse 2 zu schließen. Für eine Applikation des Applikationsmittels wird die Spule 6 dagegen so bestromt, dass das Ventilelement 9 in Figur 3 nach oben gezogen wird, um die Düse 2 freizugeben.

Die Rückstellfeder 10 drückt das Ventilelement 9 in die Schließstellung, wenn die Spule 6 unbestromt ist.

Der Druckkopf 100 und die in Figur 3 gezeigte Konstruktion dienen zum serienweisen und dauerhaften Applizieren des Applikationsmittels und können wahlweise in einem ersten Betriebsmodus und einem zweiten Betriebsmodus betrieben werden.

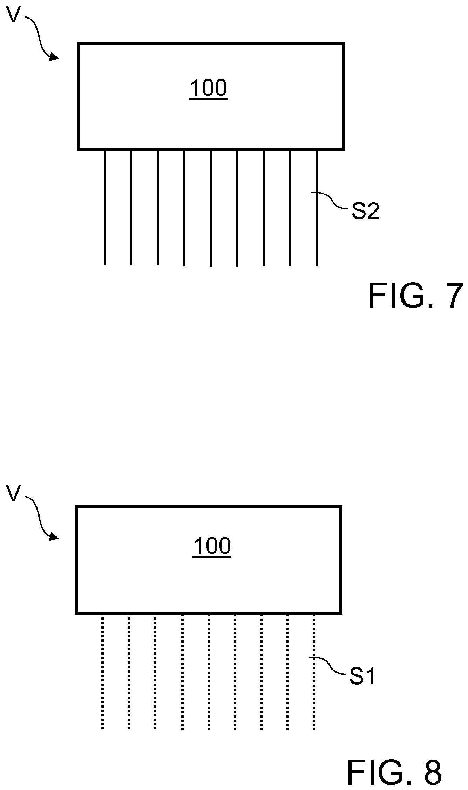

In dem ersten Betriebsmodus hält die Spule 6 das Ventilelement 9 dauerhaft in der Öffnungsstellung, zur Erzeugung eines zusammenhängenden Applikationsmittelstrahls (z. B. Figur 7).

Das Rückstellelement 10 dient zweckmäßig dazu, das Ventilelement 9 in Ruhephasen in die Schließstellung zu bewegen.

In dem zweiten Betriebsmodus sorgen die Spule 6 und das Rückstellelement 10 dafür, dass das Ventilelement 9 zwischen der Öffnungsstellung und der Schließstellung mit hoher Frequenz hin- und her bewegt wird, zur Erzeugung eines mehrere Tropfen aufweisenden Tropfenstrahls S1 (z. B. Figuren 1, 2, 5, 6 und 8).

In beiden Betriebsmodi wird die Spule 6 stark beansprucht und neigt deshalb zur Überhitzung oder zumindest starker Erhitzung. Eine Überhitzung kann zur Zerstörung der Spule 6 führen. Eine starke Erhitzung kann negative Auswirkungen auf das Applikationsmittel und/oder das Applikationsergebnis haben, wobei starke Schwankungen im Applikationsergebnis z. B. bei der serienweisen Lackierung von Kraftfahrzeugbauteilen inakzeptabel sind. Lack, insbesondere wasserbasierter Lack, kann bereits bei Temperaturen von über 30°C geschädigt werden.

Die Applikationsvorrichtung V umfasst deshalb eine Temperiereinrichtung T1, T2 und T3.

Die Temperiereinrichtung T1, T2, T3 dient zur Reduzierung einer Erwärmung des Antriebs A und zwar insbesondere zur Reduzierung einer Erwärmung der Spule 6 während der Applikation des Applikationsmittels. Kühlen ist wichtiger als Erwärmen. Erwärmen funktioniert nur bedingt, also in engen Temperaturbereichen.

In einer besonderen Ausführungsform kann der Druckkopf gleichzeitig über die Möglichkeit zum Erwärmen und zum Kühlen verfügen. Dabei können die Prozesse (Kühlen und Erwärmen) gleichzeitig an verschiedenen Stellen durchgeführt werden, z.B. Kühlen der Spule und Erwärmen des Beschichtungsmittels. Die Prozesse können aber auch nacheinander, im Speziellen an derselben Stelle, im Druckkopf ablaufen. So wäre es beispielsweise denkbar, dass beim Start des Druckkopfs zunächst eine niedrige Temperatur vorherrscht, die durch Aktivierung des Erwärmungsprozesses auf eine Temperatur erhöht wird, die sich während des laufenden Prozesses durch Wärmeentwicklung z.B. der Spulen einstellt.

Zum Erwärmen des Applikationsmittels und somit zum Erniedrigen der Viskosität des Applikationsmittels kann die Temperiereinrichtung T1, T2, T3 zweckmäßig eine Erwärmungseinrichtung (Heizer) T1 umfassen.

Die Erwärmungseinrichtung T1 dient insbesondere zum Erwärmen eines Erwärmungsfluids, wobei eine Temperierfluidleitung T2 für das Erwärmungsfluid durch den Druckkopf 100 führt, und eine Pumpe T3 zum Befördern des Erwärmungsfluids vorgesehen ist. Die Temperierfluidleitung T2 bildet eine Ringleitung, so dass die Erwärmungseinrichtung T1, die Pumpe T3 und der Druckkopf 100 über die Ringleitung miteinander in Verbindung stehen.

Die Temperierfluidleitung T2 erstreckt sich durch den Drucckopf 100 und zwar zweckmäßig entlang der Applikationsmittelzuführung 3, um so die Düsenplatte 1 und/oder die Platte 4 und dadurch das Applikationsmittel in der Applikationsmittelzuführung 3 zu erwärmen, was in Figur 3 schematisch durch die schraffierten Bereiche und den Hinweis "erwärmt" angedeutet ist.

Um eine effektive Wärmeübertragung auf das Applikationsmittel in der Applikationsmittelzuführung 3 zu bewirken, kann sich die Temperierfluidleitung T2 z. B. als Kanal innerhalb der Düsenplatte 1 und/oder der Platte 4 erstrecken. Alternativ oder ergänzend kann sich eine Temperierfluidleitung T2 natürlich auch an der Außen- und/oder Innenseite entlang der Düsenplatte 1 und/oder der Platte 4 erstrecken. Außerdem kann die Düsenplatte 1 und/oder die Platte 4 aus wärmeleitfähigem Material, z. B. einem Metall wie Aluminium oder Kupfer hergestellt sein.

Die Erwärmung des Applikationsmittel führt dazu, dass die Viskosität des Applikationsmittels reduziert wird.

Die Reduzierung der Viskosität des Applikationsmittels führt dazu, dass die Spule 6 in ihrer Öffnungsarbeit entlastet wird, was zu einer Reduzierung der Erwärmung der Spule 6 führt.

Vorteilhafterweise kann der Druckkopf 100 durch die Erwärmung des Applikationsmittels zusätzlich in die Lage versetzt werden, höherviskose und/oder (stark) strukturviskose Applikationsmittel zu verarbeiten, z. B. mit einer Viskosität von über 15mPas, über 30Pas oder sogar über 60Pas. Tinte z. B. weist als Vergleich eine Viskosität von unter 15mPas auf. Ebenfalls ermöglicht die Temperierung ein im Wesentlichen Konstant-halten der Viskosität des Applikationsmittels und somit im Wesentlichen gleichbleibende Applikationsergebnisse unabhängig von der Erwärmung der Spulen 6.

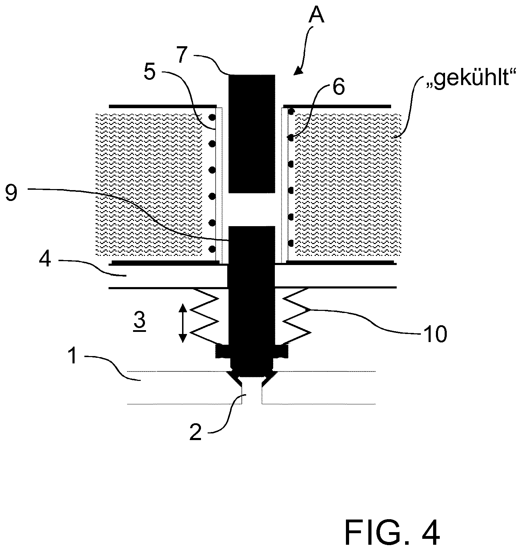

Figur 2 zeigt eine schematische Ansicht einer Applikationsvorrichtung V mit einem Druckkopf 100 gemäß einer anderen Ausführungsform der Erfindung, wobei Figur 4 eine Prinzip-/Detailansicht eines Teils des Druckkopfes 100 zeigt. Die in Figur 4 gezeigte Konstruktion entspricht im Wesentlichen der in Figur 3 gezeigten Konstruktion, wobei die Reduzierung der Erwärmung der Spule 6 allerdings auf einem anderen Wirkprinzip beruht, wie weiter unten beschrieben.

Die Applikationsvorrichtung V und insbesondere der Druckkopf 100 werden nachfolgend unter gemeinsamer Bezugnahme auf die Figuren 2 und 4 beschrieben.

Die Applikationsvorrichtung V umfasst eine Temperiereinrichtung T3, T4, T5 und T6.

Die Temperiereinrichtung T3, T4, T5, T6 dient zur Reduzierung einer Erwärmung des Antriebs A und zwar insbesondere zur Reduzierung einer Erwärmung der Spule 6 während der Applikation des Applikationsmittels.

Zu diesem Zweck umfasst die Temperiereinrichtung T3, T4, T5, T6 zweckmäßig eine Kühler- und/oder Wärmetauschereinrichtung T4 zur Kühlung der Spule 6.

Die Kühler-/Wärmetauschereinrichtung T4 dient insbesondere zum Kühlen eines Kühlfluids, wobei eine Temperierfluidleitung T5, T6 für das Kühlfluid mit einem Teilabschnitt T5 durch den Druckkopf 100 führt und optional mit einem Teilabschnitt T6 sich entlang der Außenseite des Druckkopfs 100 erstreckt, und eine Pumpe T3 zum Befördern des Kühlfluids vorgesehen ist. Die Temperierfluidleitung T5, T6 bildet eine Ringleitung, so dass die Kühler-/Wärmetauschereinrichtung T4, die Pumpe T3 und der Druckkopf 100 über die Ringleitung miteinander in Verbindung stehen.

Die Temperierfluidleitung T5 erstreckt sich durch den Drucckopf 100 und zwar zweckmäßig entlang der Spule 6, z. B. um die Spule 6, um so die Spule 6 zu kühlen, was in Figur 4 schematisch durch die schraffierten Bereiche und den Hinweis "gekühlt" angedeutet ist. Um eine effektive Kühlung zu bewirken, kann sich die Temperierfluidleitung T5 und/oder eine Wärmeleitkonstruktion aus wärmeleitfähigem Material in Umfangsrichtung der Spule 6 um die Spule 6 herum erstrecken.

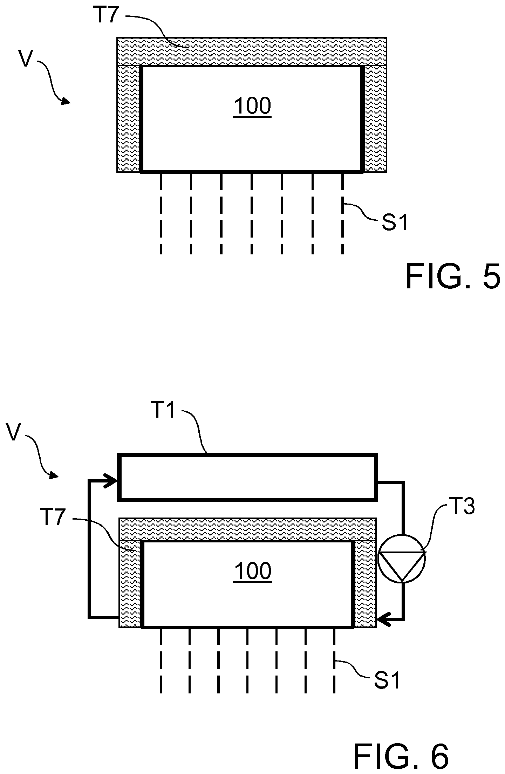

Figur 5 zeigt eine schematische Ansicht einer Applikationsvorrichtung V mit einem Druckkopf 100 gemäß einer anderen Ausführungsform der Erfindung. Der Druckkopf 100 kann z. B wie in den Figuren 3 und 4 gezeigt aufgebaut sein, mit oder ohne Kühlungs- oder Erwärmungsfunktion.

Eine Besonderheit der in Figur 5 gezeigten Ausführungsform ist, dass eine Temperiereinrichtung T7 eine Kühl-Pad-Anordnung T7 zum zumindest abschnittsweisen Einpacken des Druckkopfes 100 umfasst. Die Kühl-Pad-Anordnung T7 kann z. B. in Form eines oder mehrerer Kühlkissen oder Kühlakkus vorgesehen sein.

Eine durch den Betrieb des Druckkopfes 100 erwärmte Kühl-Pad-Anordnung T7 kann zweckmäßig in vorbestimmten Zyklen vom Druckkopf 100 entfernt werden, wobei in der Folge eine gekühlte Kühl-Pad-Anordnung T7 auf den Druckkopf 100 aufgebracht werden kann. Die Kühl-Pad-Anordnung T7 wirkt hierbei in Form einer passiven Kühlung.

Allerdings kann die Kühl-Pad-Anordnung T7 auch zur zumindest zeitweise kontinuierlichen Durchströmung mit einem Kühlfluid ausgeführt sein und zu diesem Zweck, ähnlich wie z. B. in Figur 2 gezeigt, mit einer Kühl- und/oder Wärmetauschereinrichtung T4 und einer Pumpe T3 mittels einer Ringleitung in Verbindung stehen. Die Kühl-Pad-Anordnung T7 wirkt hierbei in Form einer aktiven Kühlung.

Figur 6 zeigt eine schematische Ansicht einer Applikationsvorrichtung V mit einem Druckkopf 100 gemäß einer anderen Ausführungsform der Erfindung.

Der Druckkopf 100 und die Temperiereinrichtung der Figur 6 können wie in den Figuren 1 und 3 gezeigt aufgebaut sein, so dass zur Reduzierung einer Erwärmung des Antriebs A während der Applikation des Applikationsmittels eine Erwärmung des Applikationsmittels bewirkt wird.

Der Druckkopf 100 kann darüber hinaus mit einer Kühl-Pad-Anordnung T7 versehen sein, wie in Figur 6 gezeigt, so dass zur Reduzierung einer Erwärmung des Antriebs A während der Applikation des Applikationsmittels eine Kühlung des Antriebs A bewirkt wird.

Figur 7 zeigt eine schematische Ansicht eines Druckkopfs 100 gemäß einer Ausführungsform der Erfindung.

Der Druckkopf 100 dient zur Erzeugung eines zusammenhängenden Applikationsmittelstrahls S2, wozu die Spule 6 das Ventilelement 9 dauerhaft in der Öffnungsstellung hält.

Figur 8 zeigt eine schematische Ansicht eines Druckkopfs 100 gemäß einer anderen Ausführungsform der Erfindung.

Der Druckkopf 100 dient zur Erzeugung eines Tropfenstrahls S1, wozu die Spule 6 und das Rückstellelement 10 dafür sorgen, dass das Ventilelement 9 zwischen der Öffnungsstellung und der Schließstellung mit hoher Frequenz hin- und her bewegt wird.

Die in Figur 8 gezeigten Tropfenstrahlen S1 weisen im Wesentlichen kugelförmige Tropfen auf, wohingegen die in den Figuren 1, 2, 5 und 6 gezeigten Tropfenstrahlen S1 Tropfen aufweisen, die anfangs länglich sein können.

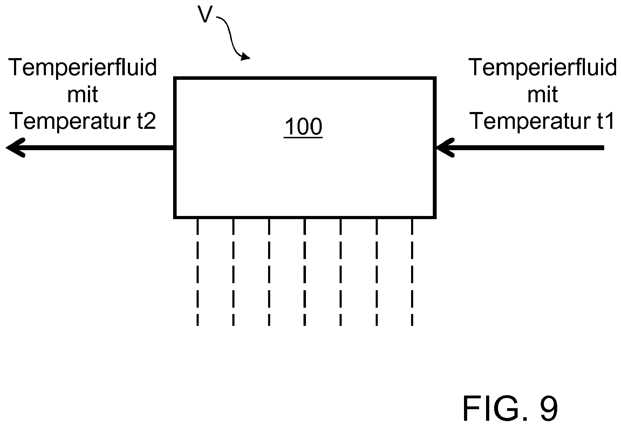

Figur 9 dient zur Veranschaulichung möglicher Wirkprinzipien der aktiven, Kühlfluid-basierten Temperierung (Kühlung und/oder Erwärmung) zum Zweck der Reduzierung einer Erwärmung des Antriebs A während der Applikation des Applikationsmittels.

Bei der Erwärmungs-basierten Variante (z. B. Figuren 1 und 3) ist das Temperierfluid (Erwärmungsfluid) stromaufwärts des Druckkopfs 100 wärmer als stromabwärts des Druckkopfs 100 (t1 größer t2).

Bei der Kühlungs-basierten Variante (z. B. Figuren 2 und 4) ist das Temperierfluid (Kühlungsfluid) stromaufwärts des Druckkopfs 100 kälter als stromabwärts des Druckkopfs 100 (t1 kleiner t2).

Alternativ oder ergänzend zu den unter Bezugnahme auf die Figuren 1 bis 9 beschriebenen Ausführungsformen kann der Drucckopf 100 gezielt mit einer (nicht gezeigten) als Wärmeleitkonstruktion aus stark wärmeleitfähigem Material, z. B. Aluminium oder Kupfer, ausgebildeten Temperiereinrichtung versehen sein, zum Zwecke der Reduzierung einer Erwärmung des Antriebs A während der Applikation des Applikationsmittels.

Die Wärmeleitkonstruktion kann ausgebildet und angeordnet sein, um von dem Antrieb A erzeugte Wärme abzuleiten.

Die Wärmeleitkonstruktion kann alternativ oder ergänzend ausgebildet und angeordnet sein, um durch die Temperiereinrichtung T1, T2, T3 erzeugte Wärme effektiv zum Applikationsmittel zu leiten. So kann z. B. die Düsenplatte 1 und/oder die Platte 4 als Wärmeleitkonstruktion ausgebildet sein.

Die Wärmeleitkonstruktion kann alternativ oder ergänzend ausgebildet und angeordnet sein, um durch die Temperiereinrichtung T3, T4, T5, T6 erzeugte Kälte effektiv zum Antrieb A und/oder um den Antrieb A herum zu leiten.

Die Wärmeleitkonstruktion kann Wärmeleitbleche und/oder Wärmeleitrippen umfassen. Auch kann die Wärmeleitkonstruktion einen Wärmeleitfunktionsblock umfassen, in dem vorzugsweise alle Antriebe A, insbesondere vorzugsweise alle Spulen 6, des Druckkopfes 100 aufgenommen sein können.

Die Wärmeleitkonstruktion kann sich z. B. abschnittsweise an der Außenseite des Druckkopfes 100 erstrecken und abschnittsweise innerhalb des Druckkopfes 100, so dass Wärme/Kälte vom Innern des Druckkopfs 100 nach außen geleitet werden kann oder umgekehrt. Die Wärmeleitkonstruktion kann sich allerdings auch im Wesentlich ganzheitlich im Innern des Druckkopfs 100 erstrecken, z. B. in dem Fall, in dem die Wärmeleitkonstruktion Wärme/Kälte des Temperierfluids weiterleiten soll. Hierbei kann, wie schon zuvor erwähnt, insbesondere die Düsenplatte 1 und/oder die Platte 4 aus wärmeleitfähigem Material ausgebildet sein und somit eine Wärmeleitkonstruktion bilden.

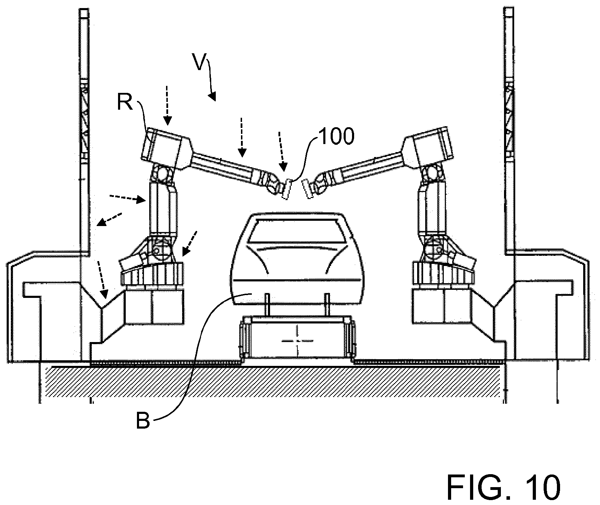

Figur 10 zeigt eine Ansicht zweier Applikationsroboter R zur Applikation eines Applikationsmittels auf ein Bauteil B in Form einer Kraftfahrzeugkarosserie, mit einer Applikationsvorrichtung V gemäß einer Ausführungsform der Erfindung. Der Übersichtlichkeit halber ist in Figur 10 nur der linke Applikationsroboter mit Bezugszeichen versehen.

Der Applikationsroboter R dient zur Führung zumindest eines Druckkopfes 100 und weist zweckmäßig zumindest fünf oder zumindest sechs bewegliche Roboterachsen auf.

Die gestrichelten Pfeile zeigen beispielhaft auf Montagestellen zur Anordnung einzelner Komponenten der hierin beschriebenen Temperiereinrichtungen, insbesondere der Erwärmungseinrichtung T1, der Pumpe T3, der Kühler- und/oder Wärmetauschereinrichtung T4 und/oder einer oder mehrerer der Temperierfluidleitungen T2, T5, T6. Hierbei können die einzelnen Komponenten zumindest abschnittsweise innerhalb oder außerhalb der gezeigten Montagestellen (z. B. Robotergehäuse, Roboterbasis, Roboterarm und/oder Druckkopf 100) angeordnet sein. Mehrere Druckköpfe können mit mindestens einer zentralen Temperiereinrichtung versorgt werden. Das Temperierfluid kann jedem Druckkopf direkt zugeführt werden und direkt zurück zur Temperiereinrichtung fließen. Es kann aber auch durch mehrere in Reihe geschaltete Druckköpfe fließen.

Ebenfalls können die Erwärmungseinrichtung T1, die Pumpe T3, und/oder die Kühler- und/oder Wärmetauschereinrichtung T4 beabstandet zum Applikationsroboter R angeordnet sein, z. B. an einer Lackierkabinenwand oder eine Robotertragstruktur (z. B. Tragkonsole oder Tragrahmen), wobei die Verbindung zum Drucckopf 100 über eine oder mehrere der Temperierfluidleitungen T2, T5, T6 erfolgen kann, die wiederum im oder entlang des Applikationsroboters R verlaufen können.

Die Erfindung ist nicht auf die vorstehend beschriebenen bevorzugten Ausführungsbeispiele beschränkt, sondern durch die beigefügten Ansprüche definiert.

### Bezugszeichenliste:

- 1: Düsenplatte
- 2: Zumindest eine Düse
- 3: Applikationsmittelzuführung
- 4: Platte
- 5: Spulenrohr
- 6: Spule
- 7: Spulenkern
- 8: Dichtung zwischen Spulenkern und Spulenrohr
- 9: Ventilelement, vorzugsweise Anker und/oder Ventilnadel
- 10: Rückstellelement
- A: Antrieb, insbesondere Ventilantrieb
- T1: Erwärmungseinrichtung, insbesondere Heizer
- T2: Temperierfluidleitung
- T3: Pumpe
- T4: Kühler- und/oder Wärmetauschereinrichtung
- T5: Temperierfluidleitung
- T6: Temperierfluidleitung
- T7: Kühl-Pad-Anordnung
- 100: Druckkopf
- V: Applikationsvorrichtung
- R: Applikationsroboter
- B: Bauteil, vorzugsweise Kraftfahrzeugkarosserie

## Patentansprüche

1. Applikationsvorrichtung (V) zum Applizieren eines Applikationsmittels auf ein Bauteil (B), vorzugsweise zur Applikation eines Lacks auf ein Kraftfahrzeugkarosseriebauteil (B), umfassend:
- einen Druckkopf (100) zum vorzugsweise serienweisen und/oder dauerhaften Applizieren des Applikationsmittels, wobei der Druckkopf (100) aufweist:
- eine Düsenplatte (1),
- zumindest eine Düse (2) in der Düsenplatte (1) zur Abgabe des Applikationsmittels,
- zumindest ein relativ zu der Düsenplatte (1) bewegliches Ventilelement (9) zur Steuerung der Applikationsmittelabgabe durch die zumindest eine Düse (2), wobei das zumindest eine bewegliche Ventilelement (9) die zumindest eine Düse (2) in einer Schließstellung verschließt und in einer Öffnungsstellung freigibt, und
- zumindest einen Antrieb (A) zum Bewegen des zumindest einen Ventilelements (9),
wobei
- die Applikationsvorrichtung (V) zumindest eine Temperiereinrichtung (T1-T8) mit einer Kühleinrichtung zum Kühlen eines Temperierfluids als Kühlfluid zur Reduzierung einer Erwärmung des zumindest einen Antriebs (A) während der Applikation des Applikationsmittels umfasst **dadurch gekennzeichnet, dass**
- die zumindest eine Temperiereinrichtung (T1-T8) ferner eine Erwärmungseinrichtung (T1) zum Erwärmen eines Temperierfluids als Erwärmungsfluid zum Erwärmen des Applikationsmittels und somit zum Erniedrigen der Viskosität des Applikationsmittels umfasst,
- und wobei die zumindest eine Temperiereinrichtung (T1-T8) zumindest eine Temperierfluidleitung (T2, T5, T6) für ein Temperierfluid umfasst, die innerhalb des Druckkopfs (100) verläuft und/oder die sich entlang der Außenseite des Druckkopfs (100) erstreckt, um den Druckkopf (100) von außen zu kühlen.

2. Applikationsvorrichtung (V) nach Anspruch 1, **dadurch gekennzeichnet, dass** die zumindest eine Temperiereinrichtung (T1-T8) eine Wärmetauschereinrichtung (T4) zur Kühlung des zumindest einen Antriebs (A) umfasst.

3. Applikationsvorrichtung (V) nach einem der vorhergehenden Ansprüche, **dadurch gekennzeichnet,**
a) **dass** nicht das Applikationsmittel als Temperierfluid dient, und/oder
b) **dass** das Temperierfluid ausgewählt ist aus:
b1) einem Gas, insbesondere Stickstoff, Luft, Druckluft,
b2) einer Flüssigkeit, insbesondere Wasser, insbesondere deionisiertem Wasser oder destilliertem Wasser,
b3) einem Kühlmittel, vorzugsweise frei von flüchtigen organischen Verbindungen,
b4) einem Spülmittel, Reinigungsmittel oder Lösemittel, insbesondere gewärmt, und/oder c) dass als Temperierfluid dienende Druckluft direkt aus einer zentralen Versorgungsleitung entnommen wird.

4. Applikationsvorrichtung (V) nach einem der vorhergehenden Ansprüche, **dadurch gekennzeichnet, dass** im Druckkopf (100) eine Applikationsmittelzuführung (3) zur Zuführung des Applikationsmittels zu der zumindest einen Düse (2) verläuft und die Applikationsmittelzuführung (3) zumindest abschnittsweise von der zumindest einen Temperiereinrichtung (T1-T8) temperiert wird.

5. Applikationsvorrichtung (V) nach Anspruch 4, **dadurch gekennzeichnet, dass**
- die zumindest eine Temperierfluidleitung (T2) zur Erwärmung des Applikationsmittels sich entlang der Applikationsmittelzuführung (3) erstreckt, und/oder
- zumindest eine Temperierfluidleitung (T2) sich so erstreckt, dass das Temperierfluid die Applikationsmittelzuführung (3) umströmt, und/oder
- die Düsenplatte (1) die Applikationsmittelzuführung (3) in deren Längsrichtung begrenzt.

6. Applikationsvorrichtung (V) nach einem der vorhergehenden Ansprüche, **dadurch gekennzeichnet, dass** die zumindest eine Temperierfluidleitung (T5)
- zur Kühlung des Antriebs (A), vorzugsweise einer elektrischen Spule (6) des Antriebs (A), sich an dem Antrieb (A) entlang erstreckt, und/oder
- sich so erstreckt, dass das Temperierfluid den zumindest einen Antrieb (A) umströmt.

7. Applikationsvorrichtung (V) nach einem der vorhergehenden Ansprüche, **dadurch gekennzeichnet, dass** der Temperierfluidvolumenstrom und/oder die Temperatur desselben so gesteuert wird, dass
- die Standzeit des Antriebs erhöht wird,
- die Temperatur im Druckkopf unterhalb der Zündtemperatur der in Beschichtungsmitteln verwendeten Lösemittel liegt.

8. Applikationsvorrichtung (V) nach einem der vorhergehenden Ansprüche, **dadurch gekennzeichnet, dass** die zumindest eine Temperiereinrichtung (T1-T8) eine Pumpe (T3) zum Befördern des Temperierfluids umfasst.

9. Applikationsvorrichtung (V) nach einem der vorhergehenden Ansprüche, **dadurch gekennzeichnet, dass** die zumindest eine Temperiereinrichtung (T1-T8) eine passive Temperierung zur Verfügung stellt und/oder eine Wärmeleitkonstruktion aus wärmeleitfähigem Material umfasst und vorzugsweise die Wärmeleitkonstruktion zumindest eine der folgenden Funktionen erfüllt:
- durch den zumindest einen Antrieb (A) erzeugte Wärme ableiten,
- durch die zumindest eine Temperiereinrichtung (T1, T2, T3) erzeugte Wärme zum Applikationsmittel leiten,
- durch die zumindest eine Temperiereinrichtung (T3, T4, T5, T6) erzeugte Kälte zum Antrieb (A) leiten.

10. Applikationsvorrichtung (V) nach Anspruch 9, **dadurch gekennzeichnet, dass** eine Wärmeleitkonstruktion der Temperiereinrichtung (T1-T8) Wärmeleitbleche und/oder Wärmeleitrippen umfasst und/oder dass eine Wärmeleitkonstruktion der Temperiereinrichtung (T1-T8) einen Wärmeleitfunktionsblock umfasst und der zumindest eine Antrieb (A) in dem Wärmeleitfunktionsblock positioniert ist.

11. Applikationsvorrichtung (V) nach Anspruch 9 oder 10, **dadurch gekennzeichnet, dass** eine Wärmeleitkonstruktion der Temperiereinrichtung (T1-T8)
- sich zumindest abschnittsweise an der Außenseite des Druckkopfes (100) erstreckt, und/oder
- zumindest abschnittsweise innerhalb des Druckkopfes (100) angeordnet ist, und/oder
- an dem zumindest einen Antrieb (A)angeordnet ist, vorzugsweise so, dass sie den zumindest einen Antrieb (A) in dessen Umfangsrichtung umspannt, und/oder
- sich entlang einer Applikationsmittelzuführung (3) im Druckkopf (100) erstreckt.

12. Applikationsvorrichtung (V) nach einem der Ansprüche 9 bis 11, **dadurch gekennzeichnet, dass** die Temperiereinrichtung (T1-T8) eine Wärmeleitkonstruktion aus wärmeleitfähigem Material umfasst, das ausgewählt ist aus:
- einem metallischen Material,
- Kupfer,
- Aluminium.

13. Applikationsvorrichtung (V) nach einem der vorhergehenden Ansprüche, **dadurch gekennzeichnet, dass** die zumindest eine Temperiereinrichtung (T1-T8) eine Kühl-Pad-Anordnung (T7) zum zumindest abschnittsweisen Einpacken des Druckkopfes (100) umfasst, wobei die Kühl-Pad-Anordnung (T7) vorzugsweise zur zumindest zeitweise kontinuierlichen Durchströmung mit einem Kühlfluid ausgeführt ist.

14. Applikationsvorrichtung (V) nach einem der vorhergehenden Ansprüche, **dadurch gekennzeichnet, dass** zumindest eines von folgenden am Druckkopf (100) montiert oder zumindest abschnittsweise im Druckkopf (100) angeordnet ist:
- die Erwärmungseinrichtung (T1),
- eine Kühler- und/oder Wärmetauschereinrichtung (T4),
- zumindest eine Temperierfluidleitung (T2, T5, T6),
- eine Pumpe (T3).

15. Applikationsvorrichtung (V) nach einem der vorhergehenden Ansprüche, **dadurch gekennzeichnet, dass** der zumindest eine Antrieb (A)
- elektromechanisch arbeitet, und/oder
- eine elektrische Spule (6) zur Betätigung des Ventilelements (9) umfasst, wobei das Ventilelement (9) in Abhängigkeit von der Bestromung der Spule (6) verschoben wird und die zumindest eine Temperiereinrichtung (T1-T8) zur Reduzierung einer Erwärmung der Spule (6) während der Applikation des Applikationsmittels dient, und/oder
- ein Rückstellelement (10) zur Betätigung des Ventilelements (9) umfasst.

16. Applikationsvorrichtung (V) nach Anspruch 15, **dadurch gekennzeichnet, dass** zur Erzeugung eines Tropfenstrahls (S1) eine elektrische Spule (6) und ein vorzugsweise elastisches Rückstellelement (10) dafür sorgen, dass das Ventilelement (9) zwischen der Öffnungsstellung und der Schließstellung hin- und her bewegt wird,
oder dass zur Erzeugung eines zusammenhängenden Applikationsmittelstrahls (S2) eine elektrische Spule (6) des Antriebs (A) das Ventilelement (9) dauerhaft in der Öffnungsstellung hält und vorzugsweise ein insbesondere elastisches Rückstellelement (10) das Ventilelement (9) in Ruhephasen in die Schließstellung bewegt.

17. Applikationsvorrichtung (V) nach einem der vorhergehenden Ansprüche **dadurch gekennzeichnet, dass** das Applikationsmittel viskos, hochviskos oder strukturviskos ist, mit einer Viskosität von über 15mPas, über 60mPas, über 100mPas oder über 130mPas und/oder vorzugsweise mit einer Viskosität kleiner als 400mPas oder kleiner als 200mPas oder kleiner als 150mPas gemessen bei einer Schergeschwindigkeit von 1000s⁻¹ und/oder ein Lack ist.

18. Applikationsvorrichtung (V) nach einem der vorhergehenden Ansprüche, **dadurch gekennzeichnet, dass**
- die zumindest eine Temperiereinrichtung (T1-T8) Teil einer Ringleitung ist, und/oder
- die zumindest eine Temperiereinrichtung (T1-T8) den zumindest einen Antrieb (A), insbesondere eine Spule (6) des Antriebs (A), während der Applikation des Applikationsmittels auf eine Temperatur von unter 80°C, unter 60°C, unter 50C° oder unter 40°C temperiert.

19. Applikationsvorrichtung (V) nach einem der vorhergehenden Ansprüche, **dadurch gekennzeichnet, dass** der Druckkopf (100) zumindest eines der folgenden Merkmale aufweist:
- der Druckkopf (100) ist zum zerstäubungs- oder sprühnebelfreien Applizieren des Applikationsmittels ausgeführt,
- der Druckkopf (100) ist auf Dauerbetrieb ausgelegt und dient zur Flächenbeschichtung des Bauteils,
- der Druckkopf (100) gibt einen eng begrenzten Applikationsmittelstrahl (T1, T2) ab im Gegensatz zu einem Sprühnebel,
- der Druckkopf (100) gibt einen Tropfenstrahl (T1) ab im Gegensatz zu einem in Strahllängsrichtung zusammen hängenden Applikationsmittelstrahl (T2),
- der Druckkopf (100) gibt einen in Strahllängsrichtung zusammen hängenden Applikationsmittelstrahl (T2) ab im Gegensatz zu einem Tropfenstrahl (T1),
- der Druckkopf (100) weist einen Auftragswirkungsgrad von mindestens 80%, 90%, 95% oder 99% auf, so dass im Wesentlichen das gesamte applizierte Applikationsmittel vollständig auf dem Bauteil abgelagert wird,
- der Druckkopf (100) weist eine Flächenbeschichtungsleistung von mindestens 0,5 m²/min, 1m²/min, 2m²/min oder mindestens 3m²/min auf,
- der Druckkopf (100) weist mindestens einen elektrisch ansteuerbaren Aktor auf, um ein Ventil zu öffnen und/oder zu schließen und dadurch das Applikationsmittel aus dem Druckkopf (100) ausfließen zu lassen, vorzugsweise einen Magnetaktor oder einen Piezoaktor.

20. Applikationsroboter (R), vorzugsweise Beschichtungs- oder Lackierroboter, mit zumindest einer Applikationsvorrichtung (V) nach einem der vorhergehenden Ansprüche, wobei der Applikationsroboter (R) zur Führung zumindest eines Druckkopfes (100) dient und vorzugsweise zumindest fünf oder zumindest sechs bewegliche Roboterachsen aufweist und wobei vorzugsweise zumindest eines von folgenden zumindest abschnittsweise an oder in den Applikationsroboter (R) montiert oder beabstandet zum Applikationsroboter (R) angeordnet ist:
- die Erwärmungseinrichtung (T1),
- die Kühler- und/oder Wärmetauschereinrichtung (T4),
- ein Teilabschnitt der zumindest einen Temperierfluidleitung (T2, T5, T6),
- die Pumpe (T3).

## Claims

1. Application device (V) for application of an application medium onto a component (B), preferably for application of a paint onto a motor vehicle body component (B), comprising:
- a print head (100) for preferably serial and/or permanent application of the application medium, wherein the print head (100) comprises:
- a nozzle plate (1),
- at least one nozzle (2) in the nozzle plate (1) for discharge of the application medium,
- at least one valve element (9), which is movable relative to the nozzle plate (1), for control of the application medium discharge through the at least one nozzle (2), wherein the at least one movable valve element (9) closes the at least one nozzle (2) in a closing position and releases it in an opening position, and
- at least one drive (A) for moving the at least one valve element (9),
- wherein the application device (V) comprises at least one temperature control apparatus (T1-T8) with a cooling device for cooling a temperature control fluid as a cooling fluid for reducing a heating of the at least one drive (A) during the application of the application medium, **characterized in that**
- the at least one temperature control apparatus (T1-T8) further comprises a heating apparatus (T1) for heating a temperature control fluid as a heating fluid for heating the application medium and thus for reducing the viscosity of the application medium,
- and wherein the at least one temperature control apparatus (T1-T8) comprises at least one temperature control fluid line (T2, T5, T6) for a temperature control fluid, which runs within the print head (100) and/or extends along the outside of the print head (100) in order to cool the print head (100) from the outside.

2. Application device (V) according to claim 1, **characterised in that** the at least one temperature control apparatus (T1-T8) comprises a heat exchanger apparatus (T4) for cooling the at least one drive (A).

3. Application device (V) according to one of the preceding Claims, **characterised in that**
a) the application medium does not serve as a temperature control fluid, and/or
b) the temperature control fluid is selected from:
b1) a gas, in particular nitrogen, air, compressed air,
b2) a liquid fluid, in particular water, in particular deionised water or distilled water,
b3) a coolant, preferably free from volatile organic compounds,
b4) a flushing medium, detergent or solvent, in particular heated, and/or
c) compressed air serving a temperature control fluid is taken directly from a central supply line.

4. Application device (V) according to any one of the preceding claims, **characterised in that**, in the print head (100), an application medium supply (3) for the supply of the application medium runs to the at least one nozzle (2) and the application medium supply (3) is temperature controlled at least in sections by the at least one temperature control apparatus (T1-T8).

5. Application device (V) according to Claim 4, **characterised in that**
- the at least one temperature control fluid line (T2) for heating the application medium extends along the application medium supply (3), and/or
- at least one temperature control fluid line (T2) extends so that the temperature control fluid flows around the application medium supply (3), and/or
- the nozzle plate (1) delimits the application medium supply (3) in its longitudinal direction.

6. Application device (V) according to one of the preceding Claims, **characterised in that** the at least one temperature control fluid line (T5)
- for cooling the drive (A), preferably an electric coil (6) of the drive (A), extends along the drive (A), and/or
- extends so that the temperature control fluid flows around the at least one drive (A).

7. Application device (V) according to one of the preceding Claims, **characterised in that** the temperature control fluid volumetric flow and/or the temperature thereof is/are controlled so that
- the service life of the drive is increased,
- the temperature in the print head lies below the ignition temperature of the solvent used in coating media.

8. Application device (V) according to one of the preceding Claims, **characterised in that** the at least one temperature control apparatus (T1-T8) comprises a pump (T3) for conveying the temperature control fluid.

9. Application device (V) according to any one of the preceding claims, **characterised in that** the at least one temperature control apparatus (T1-T8) makes available passive temperature control and/or comprises a heat-conducting construction composed of heat-conductive material and the heat-conducting construction preferably satisfies at least one of the following functions:
- discharging heat generated by the at least one drive (A),
- conducting heat generated by the at least one temperature control apparatus (T1, T2, T3) to the application medium,
- conducting cold generated by the at least one temperature control apparatus (T3, T4, T5, T6) to the drive (A) .

10. Application device (V) according to Claim 9, **characterised in that** a heat-conducting construction of the temperature control apparatus (T1-T8) comprises heat-conducting sheet plates and/or heat-conducting ribs and/or that a heat-conducting construction of the temperature control apparatus (T1-T8) comprises a heat-conducting function block and the at least one drive (A) is positioned in the heat-conducting function block.

11. Application device (V) according to claim 9 or 10, **characterised in that** the heat-conducting construction of the temperature control apparatus (T1-T8)
- extends at least in sections on the outside of the print head (100), and/or
- is arranged at least in sections inside the print head (100), and/or
- is arranged on the at least one drive (A), preferably so that it spans the at least one drive (A) in its circumferential direction, and/or
- extends along an application medium supply (3) in the print head (100).

12. Application device (V) according to any one of Claims 9 to 11, **characterised in that** the temperature control apparatus (T1-T8) comprises a heat-conducting construction of a heat-conductive material which is selected from:
- a metallic material,
- copper,
- aluminium.

13. Application device (V) according to any one of the preceding claims, **characterised in that** the at least one temperature control apparatus (T1-T8) comprises a cooling pad arrangement (T7) for packing in of the print head (100) at least in sections, wherein the cooling pad arrangement (T7) is embodied for a cooling fluid to flow through at least temporarily continuously.

14. Application device (V) according to any one of the preceding claims, **characterised in that** at least one of the following is mounted on the print head (100) or is arranged at least in sections in the print head (100):
- the heating apparatus (T1),
- a cooler and/or heat exchanger apparatus (T4),
- at least one temperature control fluid line (T2, T5, T6),
- a pump (T3).

15. Application device (V) according to one of the preceding claims, **characterised in that** the at least one drive (A)
- operates electromechanically, and/or
- comprises an electric coil (6) for activation of the valve element (9), wherein the valve element (9) is shifted in dependence on the current in the coil (6) and the at least one temperature control apparatus (T1-T8) serves to reduce heating of the coil (6) during application of the application medium, and/or
- comprises a restoring element (10) for activating the valve element (9).

16. Application device (V) according to claim 15, **characterised in that**,
in order to generate a droplet jet (S1), an electric coil (6) and a preferably elastic restoring element (10) ensure that the valve element (9) is moved to and fro between the opening position and the closing position, or
in order to generate a coherent application medium jet (S2), an electric coil (6) of the drive (A) holds the valve element (9) permanently in the opening position and an in particular elastic restoring element (10) preferably moves the valve element (9) in idle phases into the closing position.

17. Application device (V) according to any one of the preceding claims, **characterized in that** the application medium is viscous, highly viscous or structurally viscous, with a viscosity of higher than 15mPas, higher than 60mPas, higher than 100mPas or higher than 130mPas and/or preferably with a viscosity lower than 400mPas or lower than 200mPas or lower than 150mPas (measured at a shear rate of 1000s⁻¹, and/or which is a paint.

18. Application device (V) according to any one of the preceding claims, **characterised in that**
- the at least one temperature control apparatus (T1-T8) is part of a loop, and/or
- the at least one temperature control apparatus (T1-T8) performs temperature control for the at least one drive (A), in particular a coil (6) of the drive (A), during application of the application medium to a temperature of below 80°C, below 60°C, below 50C° or below 40°C.

19. Application device (V) according to any one of the preceding claims, **characterised in that** the print head (100) has at least one of the following features:
- the print head (100) is embodied for atomisation- or atomised spray-free application of the application medium,
- the print head (100) is configured for permanent operation and serves to surface-coat the component,
- the print head (100) discharges a narrowly restricted application medium jet (T1, T2) in contrast to an atomised spray,
- the print head (100) discharges a droplet jet (T1) in contrast to a coherent application medium jet (T2) in the longitudinal direction of the jet,
- the print head (100) discharges a coherent application medium jet (T2) in the longitudinal direction of the jet in contrast to a droplet jet (T1),
- the print head (100) has a degree of application efficiency of at least 80%, 90%, 95% or 99% so that substantially the entire applied application medium is deposited entirely on the component,
- the print head (100) has a surface coating performance of at least 0.5 m²/min, 1m²/min, 2m²/min or at least 3m²/min,
- the print head (100) has at least one electrically actuable actuator in order to open and/or close a valve and as a result allow the application medium to flow out of the print head (100), preferably a magnetic actuator or a piezo-actuator.

20. Application robot (R), preferably coating or painting robot, with at least one application device (V) according to any one of the preceding claims, wherein the application robot (R) serves to guide at least one print head (100) and preferably has at least five or at least six movable robot axes and wherein preferably at least one of the following is mounted at least in sections on or in the application robot (R) or in a distance to the application robot (R):
- the heating apparatus (T1),
- the cooler and/or heat exchanger apparatus (T4),
- a sub-section of the at least one temperature control fluid line (T2, T5, T6),
- the pump (T3).

## Revendications

1. Dispositif d'application (V) pour l'application d'un produit d'application sur un composant (B), de préférence pour l'application d'une peinture d'un composant de carrosserie de véhicule (B), comprenant :
- une tête d'impression (100) pour l'application de préférence en série et/ou durable du produit d'application, dans lequel la tête d'impression (100) comprend :
- une plaque de buse (1),
- au moins une buse (2) dans la plaque de buse (1) pour la distribution du produit d'application,
- au moins un élément de soupape (9) mobile par rapport à la plaque de buse (1), pour le contrôle de la distribution du produit d'application à travers l'au moins une buse (2), dans lequel l'au moins un élément de soupape mobile (9) obture l'au moins une buse (2) dans une position de fermeture la libère dans une position d'ouverture, et
- au moins un entraînement (A) pour le déplacement de l'au moins un élément de soupape (9),
- dans lequel le dispositif d'application (V) comprend au moins un dispositif de régulation de température (T1-T8) avec un dispositif de refroidissement pour le refroidissement d'un fluide de régulation de température en tant que fluide de refroidissement pour la réduction d'un échauffement de l'au moins un entraînement (A) pendant l'application du produit d'application, **caractérisé en ce que**
- l'au moins un dispositif de régulation de température (T1-T8) comprend en outre un dispositif de chauffage (T1) pour le chauffage d'un fluide de régulation de température en tant que fluide de chauffage pour le chauffage du produit d'application et donc pour la diminution de la viscosité du produit d'application,
- et dans lequel l'au moins un dispositif de régulation de température (T1-T8) comprend au moins une conduite de fluide de régulation de température (T2, T5, T6) pour un fluide de régulation de température, qui s'étend à l'intérieur de la tête d'impression (100) et/ou qui s'étend le long de la face externe de la tête d'impression (100), afin de refroidir la tête d'impression (100) de l'extérieur.

2. Dispositif d'application (V) selon la revendication 1, **caractérisé en ce que** l'au moins un dispositif de régulation de température (T1-T8) comprend un dispositif d'échangeur thermique (T4) pour le refroidissement de l'au moins un entraînement (A).

3. Dispositif d'application (V) selon l'une des revendications précédentes, **caractérisé en ce que**
a) le produit d'application ne sert pas de fluide de régulation de température et/ou
b) le fluide de régulation de température est sélectionné parmi :
b1) un gaz, plus particulièrement de l'azote, de l'air, de l'air comprimé,
b2) un liquide, plus particulièrement de l'eau, plus particulièrement de l'eau déionisée ou de l'eau distillée,
b3) un produit de refroidissement, de préférence exempt de composés organiques volatils,
b4) un produit de rinçage, un produit de nettoyage ou un solvant, plus particulièrement chauffé et/ou
c) en tant que fluide de régulation de la température, de l'air comprimé est prélevé directement dans une conduite d'alimentation centrale.

4. Dispositif d'application (V) selon l'une des revendications précédentes, **caractérisé en ce que**, dans la tête d'impression (100) s'étend une alimentation en produit d'application (3) pour l'alimentation en produit d'application de l'au moins une buse (2) et l'alimentation en produit d'application (3) est régulée en température au moins à certains endroits par l'au moins un dispositif de régulation de température (T1-T8).

5. Dispositif d'application (V) selon la revendication 4, **caractérisé en ce que**
- l'au moins une conduite de fluide de régulation de température (T2) pour le chauffage du produit d'application s'étend le long de l'alimentation en produit d'application (3) et/ou
- au moins une conduite de fluide de régulation de température (T2) s'étend de façon à ce que le fluide de régulation de température s'écoule autour de l'alimentation en produit d'application (3) et/ou
- la plaque de buse (1) limite l'alimentation en produit d'application (3) dans sa direction longitudinale.

6. Dispositif d'application (V) selon l'une des revendications précédentes, **caractérisé en ce que** l'au moins une conduite de fluide de régulation de température (T5)
- pour le refroidissement de l'entraînement (A), de préférence d'une bobine électrique (6) de l'entraînement (A), s'étend le long de l'entraînement (A) et/ou
- s'étend de façon à ce que le fluide de régulation de température s'écoule autour de l'au moins un entraînement (A).

7. Dispositif d'application (V) selon l'une des revendications précédentes, **caractérisé en ce que** le débit volumique du fluide de régulation de température et/ou la température de celui-ci est contrôlée de façon à ce que
- la durée de vie de l'entraînement soit augmentée,
- la température dans la tête d'impression se trouve en dessous de la température d'inflammation des solvants utilisés dans les produits de revêtement.

8. Dispositif d'application (V) selon l'une des revendications précédentes, **caractérisé en ce que** l'au moins un dispositif de régulation de température (T1-T8) comprend une pompe (T3) pour le transport du fluide de régulation de température.

9. Dispositif d'application (V) selon l'une des revendications précédentes, **caractérisé en ce que** l'au moins un dispositif de régulation de température (T1-T8) permet une régulation de température passive et/ou comprend une structure thermoconductrice constituée d'un matériau thermoconducteur et de préférence la structure thermoconductrice emplit au moins une des fonctions suivantes :
- dérivation de la chaleur générée par l'au moins un entraînement (A),
- conduire la chaleur générée par l'au moins un dispositif de régulation de température (T1, T2, T3) vers le produit d'application,
- conduire le froid généré par l'au moins un dispositif de régulation de température (T3, T4, T5, T6) vers l'entraînement (A).

10. Dispositif d'application (V) selon la revendication 9, **caractérisé en ce qu'**une structure thermoconductrice du dispositif de régulation de température (T1-T8) comprend des déflecteurs thermiques et/ou des nervures thermoconductrices et/ou **en ce qu'**une structure thermoconductrice du dispositif de régulation de température (T1-T8) comprend un bloc fonctionnel thermoconducteur et l'au moins un entraînement (A) est positionné dans le bloc fonctionnel thermoconducteur.

11. Dispositif d'application (V) selon la revendication 9 ou 10, **caractérisé en ce qu'**une structure thermoconductrice du dispositif de régulation de température (T1-T8)
- s'étend au moins à certains endroits sur la face externe de la tête d'impression (100) et/ou
- est disposée au moins à certains endroits à l'intérieur de la tête d'impression (100) et/ou
- est disposée sur l'au moins un entraînement (A), de préférence de façon à ce qu'elle entoure l'au moins un entraînement (A) sur sa périphérie et/ou
- s'étend le long d'une alimentation en produit d'application (3) dans la tête d'impression (100).

12. Dispositif d'application (V) selon l'une des revendications 9 à 11, **caractérisé en ce que** le dispositif de régulation de température (T1-T8) comprend une structure thermoconductrice constituée d'un matériau thermoconducteur sélectionné parmi :
- un matériau métallique,
- du cuivre,
- de l'aluminium.

13. Dispositif d'application (V) selon l'une des revendications précédentes, **caractérisé en ce que** l'au moins un dispositif de régulation de température (T1-T8) comprend une disposition de tapis de refroidissement (T7) pour l'enveloppement au moins à certains endroits de la tête d'impression (100), dans lequel la disposition de tapis de refroidissement (T7) est réalisée de préférence pour la traversée continue au moins temporaire avec un fluide de refroidissement.

14. Dispositif d'application (V) selon l'une des revendications précédentes, **caractérisé en ce qu'**au moins un élément suivant est monté sur la tête d'impression (100) ou est disposé au moins à certains endroits dans la tête d'impression (100) :
- le dispositif de chauffage (T1),
- un dispositif de refroidissement et/ou d'échangeur thermique (T4),
- au moins une conduite de régulation de température (T2, T5, T6),
- une pompe (T3).

15. Dispositif d'application (V) selon l'une des revendications précédentes, **caractérisé en ce que** l'au moins un entraînement (A)
- fonctionne de manière électromécanique et/ou
- comprend une bobine électrique (6) pour l'actionnement de l'élément de soupape (9), dans lequel l'élément de soupape (9) est coulissé en fonction de l'alimentation de la bobine (6) et l'au moins un dispositif de régulation de température (T1-T8) permet la réduction d'un échauffement de la bobine (6) pendant l'application du produit d'application et/ou
- comprend un élément de rappel (10) pour l'actionnement de l'élément de soupape (9).

16. Dispositif d'application (V) selon la revendication 15, **caractérisé en ce que**, pour la production d'un jet de gouttes (S1), une bobine électrique (6) et un élément de rappel (10) d préférence élastique, garantissent que l'élément de soupape (9) soit déplacé avec un mouvement de va-et-vient entre la position d'ouverture et la position de fermeture,
ou **en ce que**, pour la production d'un jet de produit d'application cohérent (S2), une bobine électrique (6) de l'entraînement (A) maintient l'élément de soupape (9) durablement dans la position d'ouverture et de préférence un élément de rappel (10), de préférence élastique, déplace l'élément de soupape (9), dans les phases de repos, vers la position de fermeture.

17. Dispositif d'application (V) selon l'une des revendications précédentes, **caractérisé en ce que** le produit d'application est visqueux, hautement visqueux ou présente une viscosité intrinsèque, avec une viscosité de plus de 15 mPas, de plus de 60 mPas, de plus de 100 mPas ou de plus de 130 mPas et/ou de préférence avec une viscosité inférieure à 400 mPas ou inférieure à 200 mPas ou inférieure à 150 mPas, mesurée à une vitesse de cisaillement de 1 000 s⁻¹ et/ou est une peinture.

18. Dispositif d'application (V) selon l'une des revendications précédentes, **caractérisé en ce que**
- l'au moins un dispositif de régulation de température (T1-T8) fait partie d'une conduite annulaire et/ou
- l'au moins un dispositif de régulation de température (T1-T8) régule la température de l'au moins un entraînement (A), plus particulièrement une bobine (6) de l'entraînement (A), pendant l'application du produit d'application à une température inférieure à 80 °C, inférieure à 60 °C, inférieure à 50 °C ou inférieure à 40 °C.

19. Dispositif d'application (V) selon l'une des revendications précédentes, **caractérisé en ce que** la tête d'impression (100) présente au moins un des caractéristiques suivantes :
- la tête d'impression (100) est conçue pour l'application, exemptes de poussières ou de brouillard de pulvérisation du produit d'application,
- la tête d'impression (100) est conçue pour un fonctionnement permanent et permet le revêtement de surface du composant,
- la tête d'impression (100) distribue un jet de produit d'application (T1, T2) étroitement limité, contrairement à un brouillard de pulvérisation,
- la tête d'impression (100) distribue un jet de gouttes (T1), contrairement à un jet de produit d'application (T2) cohérent dans la direction longitudinale du jet,
- la tête d'impression (100) distribue un jet de produit d'application (T2) cohérent dans la direction longitudinale du jet, contrairement à un jet de gouttes (T1),
- la tête d'impression (100) présente un rendement d'application d'au moins 80%, 90 %, 95 % ou 99 %, de façon à ce que l'ensemble du produit d'application appliqué soit déposé globalement entièrement sur le composant,
- la tête d'impression (100) présente une performance de revêtement de surface d'au moins 0,5 m²/min, 1 m²/min, 2 m²/min ou d'au moins 3 m²/min,
- la tête d'impression (100) comprend au moins un actionneur contrôlable électriquement, afin d'ouvrir et/ou de fermer une soupape et de laisser ainsi le produit d'application s'écouler hors de la tête d'impression (100), de préférence un actionneur magnétique et/ou un actionneur piézoélectrique.

20. Robot d'application (R), de préférence robot de revêtement ou de peinture, avec au moins un dispositif d'application (V) selon l'une des revendications précédentes, dans lequel le robot d'application (R) permet de guider au moins une tête d'impression (100) et comprend de préférence au moins cinq ou au moins six axes de robots mobiles et dans lequel de préférence au moins un des éléments suivants est monté au moins à certains endroits sur ou dans le robot d'application (R) ou disposé de manière distante du robot d'application (R) :
- le dispositif de chauffage (T1),
- le dispositif de refroidissement et/ou d'échangeur thermique (T4),
- une partie de l'au moins une conduite de fluide de régulation de température (T2, T5, T6),
- la pompe (T3).
